(19) Europäisches Patentamt
European Patent Office
Office européen des brevets

(11) Publication number: 0 229 164 B1

(12) **EUROPEAN PATENT SPECIFICATION**

(45) Date of publication of patent specification:
05.06.91 Bulletin 91/23

(51) Int. Cl.⁵: **G06F 15/62**, G09G 1/02

(21) Application number: 86904601.1

(22) Date of filing: 27.06.86

(86) International application number:
PCT/US86/01391

(87) International publication number:
WO 87/00321 15.01.87 Gazette 87/01

(54) BITMAPPED GRAPHICS WORKSTATION.

(30) Priority: 09.07.85 US 753271

(43) Date of publication of application:
22.07.87 Bulletin 87/30

(45) Publication of the grant of the patent:
05.06.91 Bulletin 91/23

(84) Designated Contracting States:
DE FR GB IT

(56) References cited:
EP-A- 0 121 015
WO-A-85/02049
US-A- 4 492 956
US-A- 4 528 642
US-A- 4 549 275

(56) References cited:
US-A- 4 559 533
US-A- 4 570 161
US-A- 4 584 573
US-A- 4 586 036
See also references of WO8700321

(73) Proprietor: AMERICAN TELEPHONE AND
TELEGRAPH COMPANY
550 Madison Avenue
New York, NY 10022 (US)

(72) Inventor: KAPUR, Rajan, Netralal
4776 Hedgewick Avenue
Fremont, CA 94538 (US)

(74) Representative: Blumbach Weser Bergen
Kramer Zwirner Hoffmann Patentanwälte
Sonnenberger Strasse 100
W-6200 Wiesbaden 1 (DE)

## Description

The invention relates to a bitmapped graphics workstation in accordance with the preamble of the main claim.

"Windowing" is a feature that has recently gained much popularity in the fields of graphics workstations, personal computers, etc. The screen of a display device, such as a workstation monitor, is partitioned into separate rectangular areas (windows), each of which may be assigned to view and/or control the activities of the same or different processes being carried out by an associated processor. Thus, for example, if two windows are defined on a display screen, a user might initiate an output printing process in one window and the activate the second window for on-line text processing while the bachground printing is progressing.

Document WO-A-85/02049 discloses a method of electronically moving portions of various images on a CRT screen. To accomplish this method several images are sequenially stored in different sections of an image memory. Further each image to be displayed on the screen is defined by priority bits indicating the most preferred image down to the image having the lowest priority. These priority bits are stored in a control bit memory. In order to decide which portion of the images are to be displayed with respect to their priority bits the content of the image memory is respectively correlated to the content of the control bit memory. In response to the correlation the entire position of an image with the highest priority is being displayed, whereas only the non-overlapping portion of the images with lower priority are being displayed on the screen. The control bit memory may be modified in order to change the priority of the images, respectively and the images are displayed in a new order with respect to the changed priority.

Performance has been a problem with prior art windowing techniques as applied in the field of bitmapped graphics. Suffice it to say that the primary reason for performance problems has been the need for massive data shuffling as window data is updated. This is caused by the manner in which data is stored for display in prior art techniques. For prior art provides one bitmapped display memory. The states of consecutive bits of the memory reflect the on/off states of consecutive pixels of the display screen. The bit states are sequentially obtained from the memory and sent to the display device as the screen of the device is raster scanned. Thus, as scrolling is performed in one window, for example, large proportions of the memory, corresponding to the position of the window on the display screen, must be continually updated.

By contrast, border generation for windows in the prior art bitmapped techniques is relatively simple. Since the one memory contains display data for the entire display screen, all that need be done to generate visual window borders is to set the appropriate bits in the memory to an appropriate state. The border data remains static in the memory as long as the position of the window on the screen is not changed.

Subject matter dramatically achieves an improvement in the performance of bitmapped graphics workstations. This is achieved in part by providing separate bitmaps for each defined window and by fetching screen data from appropriate places in the individual bitmaps as the display screen is refreshed. This technique, while it greatly improves performance, creates difficulty in the generation of window borders. This is because the technique, when used in conjunction with prior art border generating techniques causes a window to move on the screen as horizontal or vertical scrolling is performed in the window.

Therefore, it is an object of the present invention to provide an bitmapped graphics workstation that allow's readily handling several independent windows on a screen and displaying different visual information within any individual window as a visual aid to a user.

The objects are solved by features as claimed in the characterising portion of the main claim. Further features defining preferred embodiments of the present invention are recited in the sub-claims.

Brief Description of the Drawing

In the drawing,
Fig. 1 is an illustration of a display screen with two windows as they might appear in the prior art and with this invention ;
Fig. 2 is an illustration of how display data is stored in a single bitmap in the prior art ;
Fig. 3 illustrates how display data is stored in individual window bitmaps in the preferred embodiment of the present invention ;
Fig. 4 shows an illustration individual bitmap in the present invention with the data corresponding to individual raster lines vertically stacked so as to visually resemble a display screen ;
Fig. 5 is an illustrative block diagram of the overall graphics workstation including a window- manager circuit ;
Fig. 6 is an illustrative block diagram of the window manager, including individual per window circuits and common circuits ;
FIG. 7 is a simplified view of a window backlaid with illustrative bitmap data that illustrates the effect of scrolling the window and the corresponding effects on bitmap address generation ;
FIG. 8 illustrates a per window circuit that stores data defining the boundaries of a window, bitmap data for generating bitmap addresses and window depth and stipple data ;
FIG. 9 illustrates a per window circuit for detecting when the associated window is being refreshed on the display device and related circuitry in a common interface circuit to a host precursor ;

FIG. 10 illustrates common and per window circuitry for determining which, if any, window is being refreshed on the display device ;

FIG. 11 shows an illustrative per window bitmap address generator ;

FIG. 12 shows an illustrative output control circuit as part of the common circuitry and a window border detector that identifies when a window border is being refreshed on the display device ;

FIG. 13 illustrates an exemplary circuit for generating window background (stipple) patterns ;

FIG. 14 illustrates an exemplary output shift register circuit that generates vertical window border data and transmits this data and etched display data to the display device ; and

FIG. 15 defines window area and borders in the illustrative embodiment in terms of boolean expressions of signals generated by the disclosed circuitry.

## Detailed Description

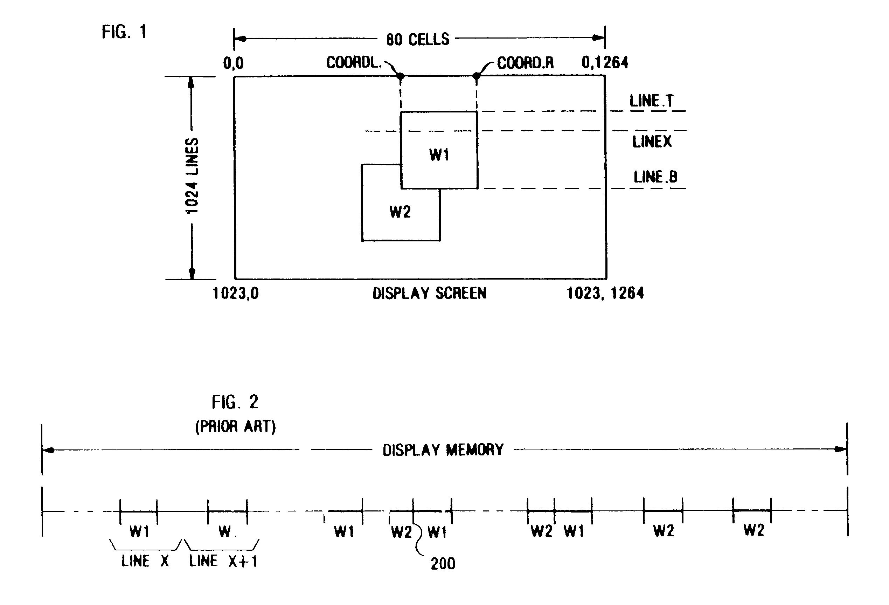

FIG. 1 illustrates the face of a display screen as it might appear in an implementation of the present invention. By way of example, the screen comprises 1024 scan lines in the vertical direction with each line made up of 80 horizontal cells. Without limitation, each cell is the atomic unit of horizontal display in this illustrative embodiment and is composed of 16 horizontal pixels. The upper left corner of the screen is assumed to have an address of line 0 and pixel 0 (or 0,0). Similarly, the upper right corner of the screen is assumed to have a line and pixel address of 0,1264 (line 0, pixel 16*79), and so on. In the embodiment to be described, up to sixteen different work windows may be defined anywhere on the screen by a user. Different and independent work processes may typically be associated with each window. Processes associated with some windows may be idle, for example, while none, one or more processes associated with other windows are active. A user might, for example, activate an output printing process for data associated with one window and then change to another window for interactive editing while the printing is proceeding.

For illustration, the screen in FIG. 1 is assumed to be partitioned into two overlapping work windows W1 and W2. With reference to W1, the projection of its upper-left corner onto the top scan line 0 gives a left cell coordinate COORD.L for W1. Similarly, the projection of the upper-right corner onto line 0 gives a right cell coordinate address COORD.R for W1. Parameters LINE.T and LINE.B define the respective upper and lower line addresses of the window. Equivalent parameters are associated with each defined window.

FIG. 2 illustrates the manner in which window data is stored for the screen of FIG. 1 by the prior art. Individual bits of a contiguous display memory correspond one-for-one with the sequential pixels of the screen as each line is raster scanned. Thus, one contiguous segment of the memory contains the display data for a line X (shown in FIG. 1) of the screen. Part of the data in this segment corresponds to W1. A next contiguous segment contains data for line X + 1, part of which corresponds to W1, and so on. It is easy to see how this leads to complexities, for example, when at 200 of FIG. 2, W1 and W2 begin to overlap. A scrolling of W2, for example, has to take into account the overlapping of the windows and provide for moving "hidden" data in W2 (data that is under W1) into and out of the display memory as scrolling proceeds.

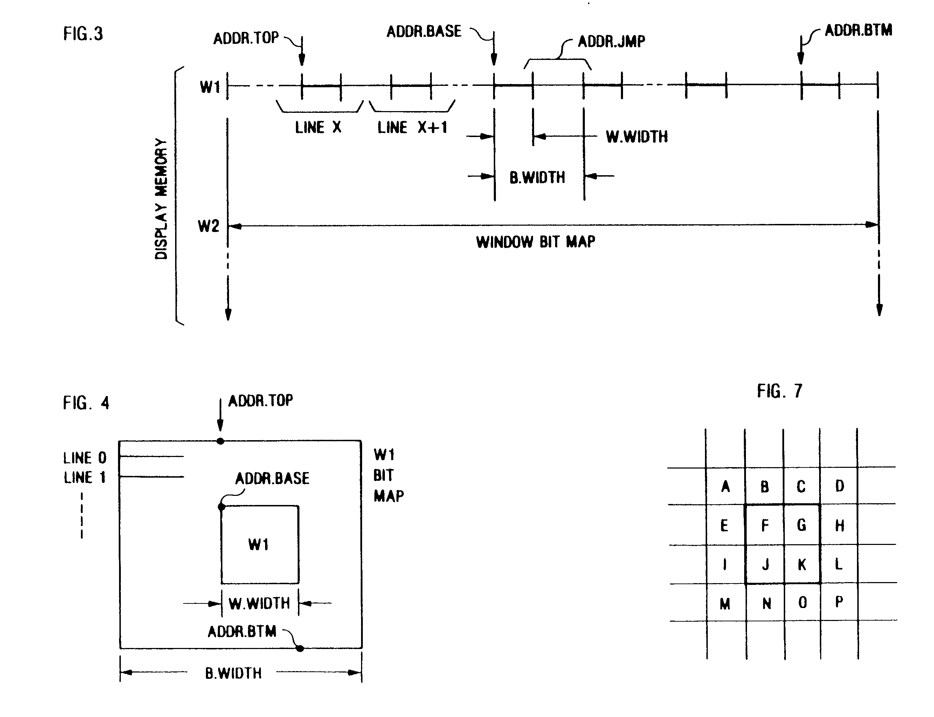

By contrast, FIG. 3 illustrates the manner that display data is handled in this invention. A display memory is partitioned into a plurality of contiguous segments, each of which pertain to a potential window. Henceforth, we will refer to the entire memory as the display memory and the individual contiguous segments for each window as a bitmap. The data in each bitmap is arranged in a fashion similar to that of FIG. 2. With reference to the bitmap corresponding to W1, for example, the data to be displayed in successive lines of the window at a given time are shown in bold in FIG. 2. The arrangement of FIG. 3 reduces many of the problems of data shuffling inherent in the arrangement of FIG. 2. For example, "hidden" data is maintained in the window bitmap memory and need not be relocated as scrolling proceeds. Only that data in a window bitmap that is to be displayed is addressed at the appropriate time, as will be seen. Preferably, each bitmap is larger than that required for the full display screen. This allows any window to be any size up to the size of the screen, or to be located anywhere on the screen and also to be scrolled horizontally and vertically.

The parameters ADDR.TOP, ADDR.JMP ADDR.BASE, ADDR BTM, W.WIDTH and B.WIDTH refer to addresses, actually relative addresses, in the individual bitmaps, rather than to screen addresses. FIG. 4 is the bitmap for W1 in which the contiguous sections pertaining to the raster lines of a screen are stacked to give the physical appearance of a screen. This presentation of the bitmap makes it easier to envision the significance of the above parameters. At any given time, ADDR.BASE is the bitmap address at the beginning of the window. ADDR BTM is the last address before the end of the bitmap containing data to be displayed at any given time. ADDR.TOP is the bitmap address containing the next set of line data for the window after that at ADDR.BTM. W.WIDTH is the width of the window in cells. Each cell corresponds to 16 screen pixels. B.WIDTH is the width of the display screen in cells. ADDR.JMP is the cell distance in the bitmap between the right-most edge of the window and the left-most edge of the window in the next screen line (in other words, ADDR.JMP = B.WIDTM − W.WIDTM). It should be noted here that windows may or may not contain borders, as desired by a user. If a border is defined for a window the outside edges of the vertical and horizontal borders correspond to the edges of the window in this illustrative embodiment. In other words a border is contained within its associated window

FIG. 7 shows a simplified 2 cell by 2 cell window backlaid with characters to illustrate how scrolling is effected in the invention. The view shows characters F, G, J and K present in the windows. If the window is vertically scrolled down one cell, the host processor 502 modifies the contents of ADDR.BASE by adding to it the number of raster lines assigned to one cell. This causes the window to next display the characters J, K, N and O. If then, the window is scrolled right one cell, ADDR.BASE, ADDR TOP and ADDR.BTM must be changed. Specifically, the number of pixels in a cell is added to each of these registers. This brings into view the characters K, L, O and P. The modifications to these registers to effect additional scrolling operations should now be evident. It should be noted that no bitmap data transfer is required.

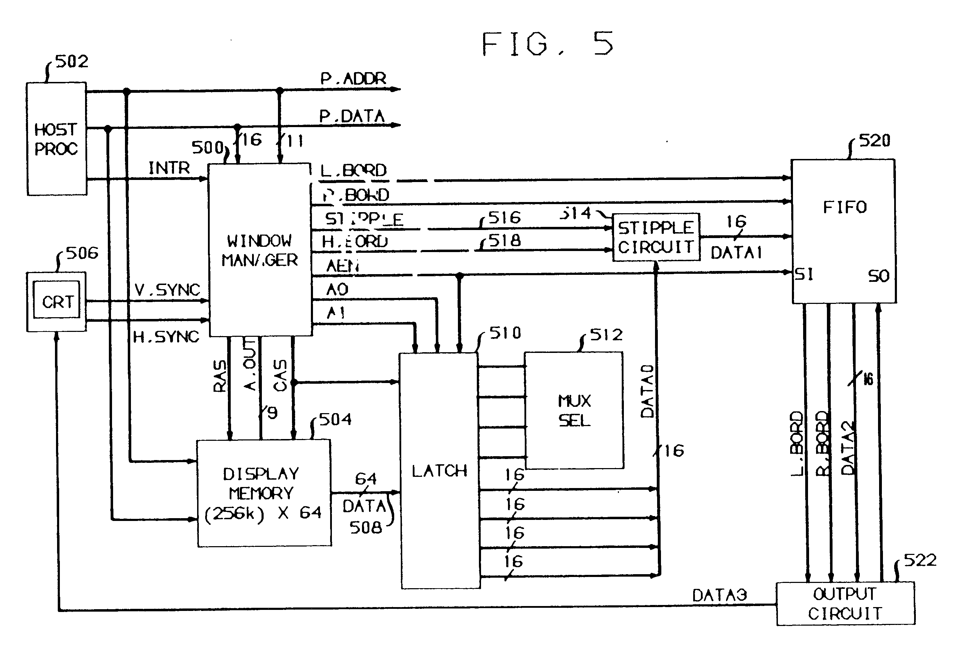

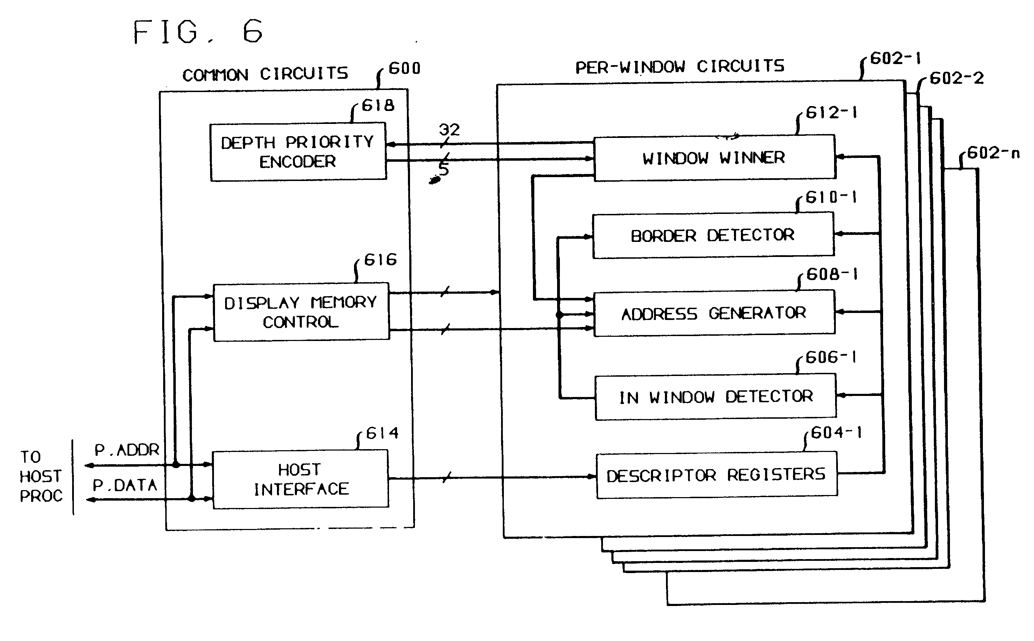

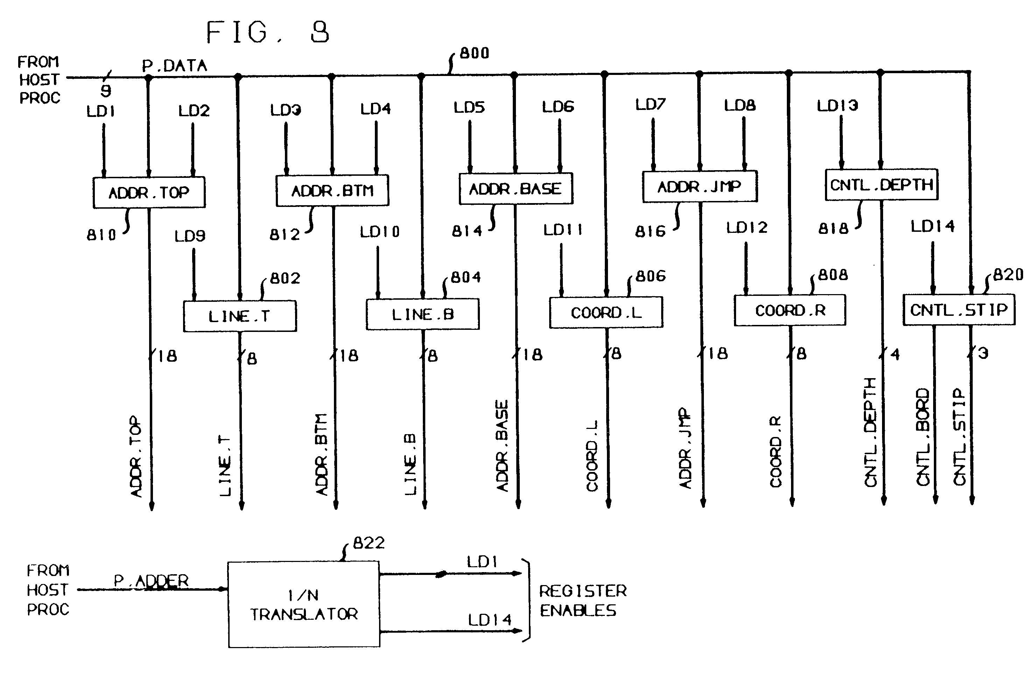

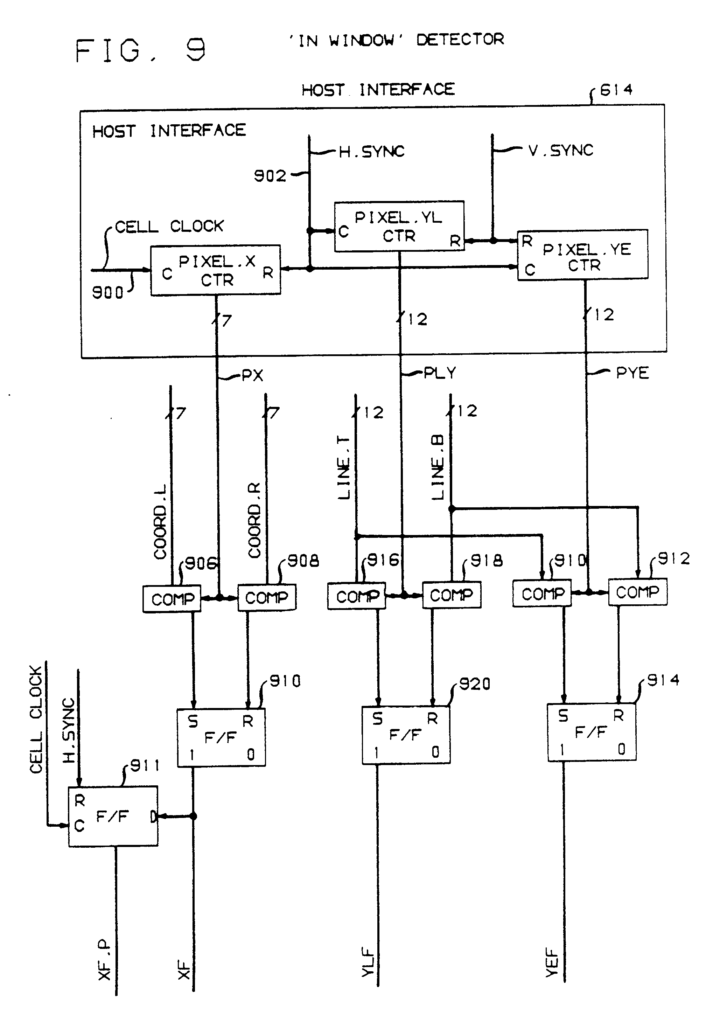

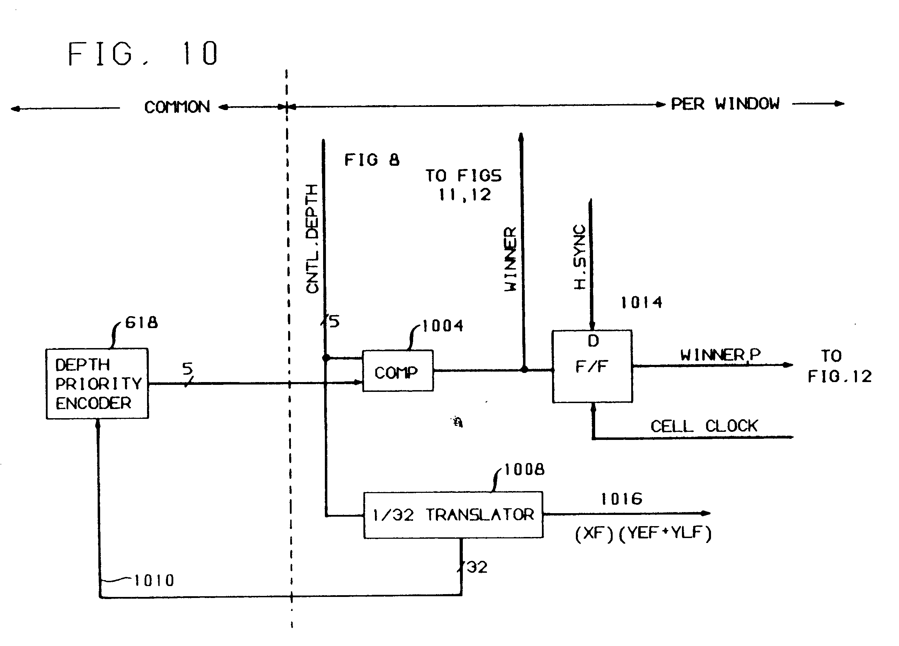

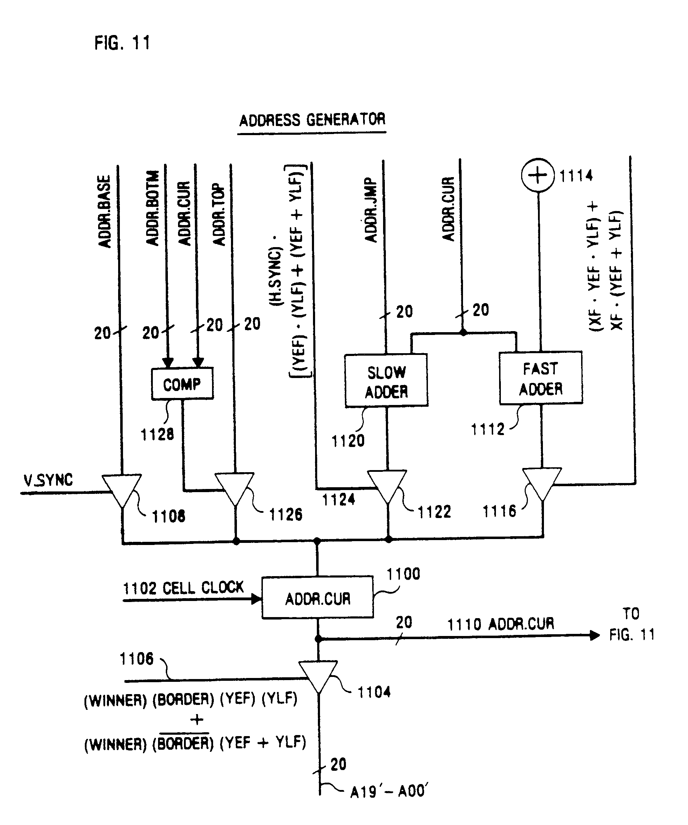

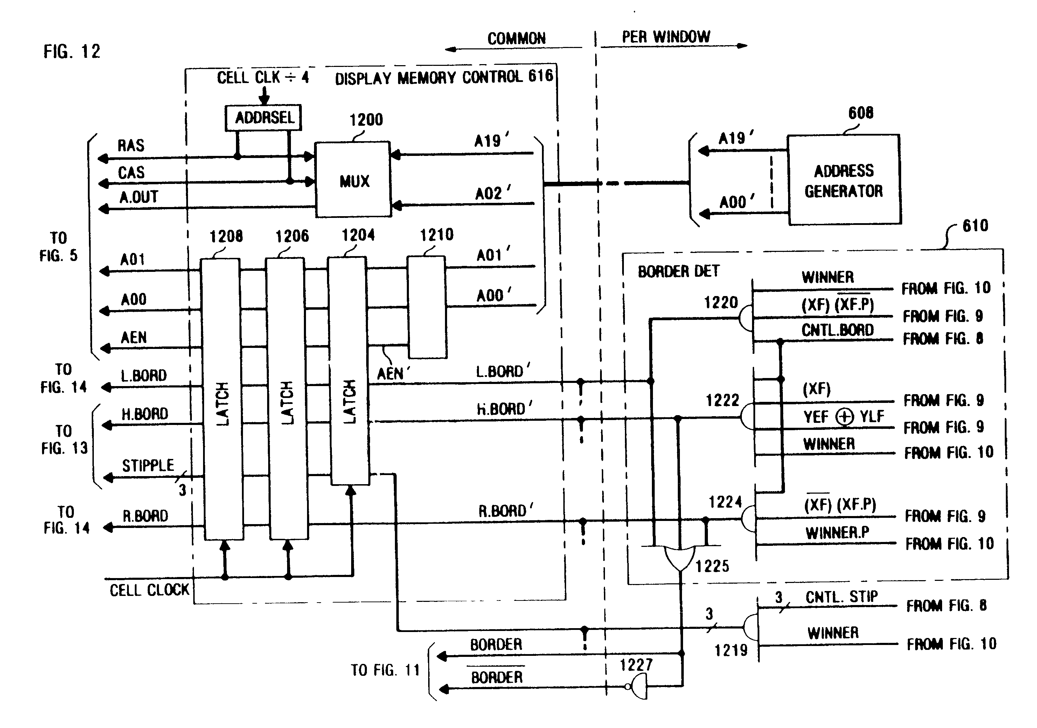

FIG. 5 shows a block diagram of the overall system. A window manager 500 interconnects a host processor or microprocessor 502, a display memory 504, a display screen 506 and a number of output circuits. Processor 502 writes display data into the display memory 504 via address and data busses P.ADDR and P.DATA. Signals on lead INTR from window manager 500 to processor 502 tell the processor when it is okay to write. In addition, processor 502 writes data into internal registers of window manager 500 to control from where display data is retrieved for each window during raster scanning of display 506. Display memory 504 is illustratively a 256K by 64 bit memory (1K = 1024 bits). Data is outputted from memory 504 on bus 508 in 64 bit words. The slash in 508 indicates a multilead bus, and the number beside the slash indicates the number of leads in the bus. This notation is used throughout the disclosure. An input read,address bus A.OUT extending from the window manager 500 to display memory 504, however, is only 9 bits wide, whereas 18 address bits are required to address 256K 64-bit words. Therefore, two operations are required to specify the required 18 address bits. A signal on lead RAS (row address signal) signals the first operation and a signal on lead CAS (column address signal) signals the second operation.

A 64-bit word from display memory 504 illustratively comprises data for four 16-bit contiguous cells on the display screen. The entire word is inputted into a latch 510 and the data for the individual cells metered out at appropriate times under control of a multiplexer select circuit 512. Circuit 512 is, in turn, controlled by signals on an address enable lead AEN and two address select leads A0 and A1, which identify the particular 16-bit word to be selected from the 64-bit word.

The cell data from latch 510 is routed into a stipple circuit 514 on bus DATA0. This circuit is controlled by STIPPLE signals on bus 516 and by a horizontal border detection signal H.BORD on lead 518 from the window manager 500 to add desired selective background textures onto the screen to individual windows and to add the horizontal portions of screen borders to the windows, if desired.

The screen data from memory 504, now modulated with stipple and horizontal border data as needed, is inputted into a first-in-first-out buffer 520 from bus DATA1 under control of signals at its shift-in (SI) input and from there outputted to an output circuit 522 under control of signals at its shift-out (SO) input. Before outputting, however, circuit 522 adds vertical window border signals to the data, as required, in accordance with the state of left and right vertical bonded signals on leads L.BORD and R.BORD. From circuit 522, display data is sent serially to the display device 506 on lead DATA3.

A more detailed block diagram of the window manager 500 is shown in FIG. 6. It comprises a common section 600 which interacts with a plurality (up to sixteen in the exemplary embodiment) of per window sections 602-I through 602-n. A host interface circuit 614 provides the connection to a host processor 502. Each per window section may be associated with an individual window defined at any given time. Since the per window sections are identical, only the details of 602-I are shown. A descriptor registers circuit 604-I contains a number of registers defining the screen boundaries, border, stipple and depth of the associated window. These registers are loaded by the host processor via a host interface circuit 614 in the common section. An address generator 608-I in the per window section uses the register-data from circuit 604-I to generate bitmap addresses for fetching screen data for the associated window. This address data is only used, however, when the respective window is actively being scanned on the screen. To determine which window, if any, is actively being scanned, a depth priority encoder 618 in the common section continuously interacts with window winner circuits such as 612-I in each of the per window sections to determine a window with the highest depth at the point on the screen presently being scanned. The "in window" circuit 606-I in each per window section determines from window definition data and screen position data if the associated window is presently being scanned on the screen. At the same time, the individual window winner circuits obtain respective depth information from the respective descriptor circuits, such as 604-I and broadcasts this information to the depth priority encoder 618. Circuit 618, in turn, determines the highest depth window at any given time and returns this information to each of the window winner circuits in the per window sections. Outputs from the window winner circuits 612 and the "in window" detectors 606 are examined by the respective address generators 608. If the window area being scanned on the screen is also identified as the present winner, the appropriate address generator 608 is enabled and generates and passes appropriate bitmap addresses to the display memory control circuit 616 for fetching the screen update information.

A Border detector 610 in each of the per window circuits detects when border areas of windows are being replaced, if borders are defined, and controls the generation of special signals to create the borders on the screen. Thus, data for creating the window borders is not stored in the bitmaps. The reason for this will become apparent below.

These individual circuits are now described in detail. A descriptor registers circuit 604 is shown in FIG. 8. When a window is first defined, the defining data arrives on the P.DATA bus 800 from the host processor 502 and is loaded into the registers 802, 804, 806 and 808. These registers are respectively identified as LINE.T, LINE.B, COORD.L, and COORD.R and contain the screen parameters of the window as shown in FIG. 1. When a window is first defined, the host processor also determines the bitmap addresses for the parameters ADDR.TOP, ADDR.BTM, ADDR.BASE and ADDR.JMP, shown in FIGS. 3 and 4, and loads these into the respective registers 810, 812, 814 and 816. Two remaining registers CNTL.DEPTH and CNTL.STIP are loaded with numbers that define the depth of a window and a background texture (stipple) for the window as displayed on the screen. These are user preferences and may be changed by a user at any time by entering appropriate commands to the host processor. To load the appropriate data into the correct registers, a register address is transmitted on address bus P.ADDR with each set of register data from the host interface. A 1-out-of-N translator 822 decodes the P.ADDR address into an enable signal LD1 through LD14 which identifies and enables the appropriate register for which the data is intended. Registers 810, 812, 814 and 816 contain the most significant eighteen bits of a twenty bit display memory address. Therefore, two data load operations are necessary for these registers, since bus P.DATA is nine bits wide. Accordingly, two different LD signals from translator 822 are used to load each of these registers.

An "in window" detector is shown in FIG. 9 along with part of the host interface 614. The host interface contains three counters PIXEL.X, PIXEL.YL and PIXEL.YF. PIXEL.X keeps track of the present horizontal cell position presently being displayed on the screen. It is recalled that a cell is illustratively sixteen pixels wide in the preferred embodiment. Thus, the cell clock at 900, which is being counted by PIXEL.X is really the pixel clock divided by sixteen. As the scanning of each screen line is completed, a horizontal sync signal H.SYNC at 902 from the display 506 resets PIXEL.X. The signals on H.SYNC are also counted by screen line counters PIXEL.YL and PIXEL.YE. Both of these counters are reset by a vertical sync signal V.SYNC on lead 904 from the display 506 each time a full screen is completed. PIXEL.YE resets to zero. PIXEL.YL, however, is arranged to reset to a negative four. The reason for having two line counters and the reset value distinction has to do with window border generation, as will be seen.

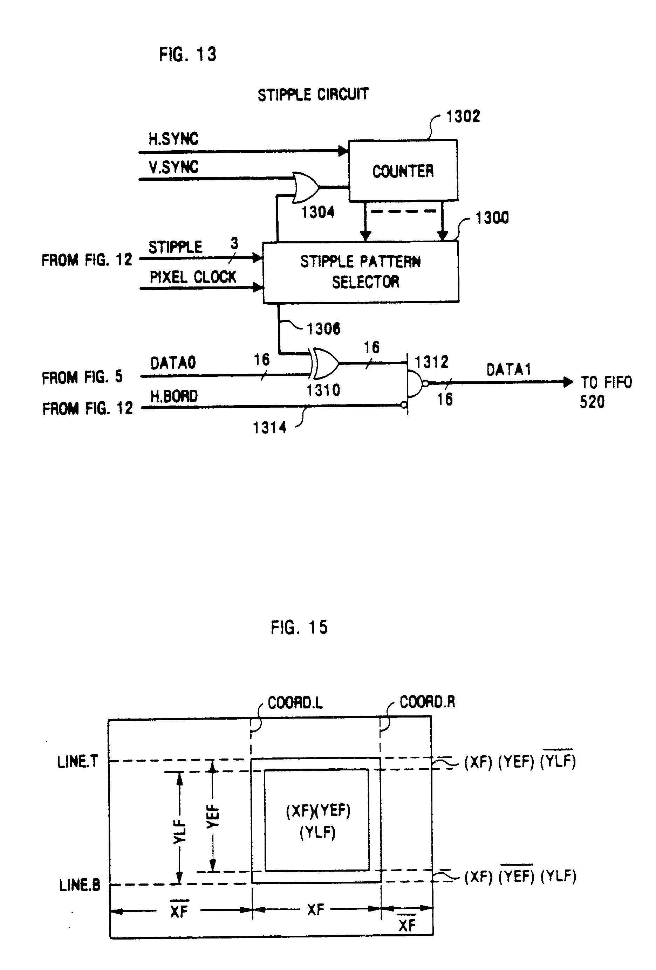

The cell count is outputted on bus PX to two comparators 906 and 908. Respective secondary inputs to these comparators come from the registers COORD.L and COORD.R in the descriptor registers circuit in FIG. 8. When the screen raster is at the position corresponding to COORD.L, that is entering the window on the left (see FIG. 1), comparator 906 sets a flip-flop 910. This flip-flop is reset by comparator 908 as the window is exited on the right. Thus, flip-flop 910 produces a signal on its output lead XF whenever the screen raster is within the horizontal bounds of the window. This signal is delayed by one cell time by delay flip-flop 911 to generate a delayed signal on output lead XF.P. This signal is used by border detector 610 to define the raster time corresponding to a vertical left or right window border and is discussed with respect to FIG. 12. Flip-flop 911 is reset at the beginning of each raster line by H.SYNC to prevent any carryover effect from the immediately preceding line.

In a similar fashion as above, comparators 910, 912 and flip-flop 914 generate a signal on output lead YEF whenever the screen raster is within the vertical bounds of the window. A signal on lead YLF is an image of that of YEF, but precedes YEF by four raster lines due to the reset states of PIXEL.YL and PIXEL.YE and to the action of comparators 916, 918 and flip-flop 920.

The physical meaning of the above window signals can be seen easily in FIG. 15 which depicts a screen with a single window including a border. In the horizontal scanning direction, XF becomes true when the raster is between COORD.L and COORD.R. Note that for a window with a border, the border is inside these coordinate points. In the vertical direction, YEF is true from LINE.T (including the upper horizontal border, if any) to the bottom line of the inside of the window (i.e., not including the lower horizontal border). Conversely, YLF is true between the upper window line, not including the upper horizontal border, to the bottom line, including the bottom border. Thus, the inside of a bordered window is defined by the boolean expression (XF) (YEF) (YLF). The upper border, if any, is being scanned when the boolean expression (XF) (YEF) (YLF) is true. The bottom border, if any, is being scanned when the boolean expression (XF) (YEF) (YLF) is true. The vertical left and right borders are not defined by boolean expressions, but are handled by one-quarter cell timing delays when signal XF transitions from true to false and from false to true, as will be seen.

A window winner circuit 612 is shown on the right side of FIG. 10. The left side, separated by a vertical dotted line, is the depth priority encoder 618 in the common section of the window manager. A five lead bus 1000 extends to each of the individual window circuits. A multiple on bus 1000 to each of the other per window sections is shown at 1002. On the right side of FIG. 10, an indication of the depth of a window is brought into a comparator 1004 on bus 1006 from the descriptor registers circuit in FIG. 8. This depth indication is also received and decoded into a 1-out-of-32 signal by translator 1008, if translator 1008 is enabled, and a resulting signal is placed onto an appropriate lead of bus 1010 extending back to the depth priority encoder 618. Translator 1008 is enabled by a signal on lead 1016 generated from "in window" detector signals in FIG. 9 which, as indicated by the boolean equation (XF) (YEF + YLF), occurs whenever the display raster is inside a window.

Bus 1010 is also multiplied to the other per window circuits as indicated at multiple 1012. Encoder 618 determines the highest priority signal present on bus 1010 at any time and returns an indication of this on bus 1002 in the same format as the depth indications received from the descriptor registers circuit. Comparator 1004 in each per window circuit compares the highest priority indication from encoder 618 to its window depth and generates a signal on lead WINNER if a match is detected. This signal is also delayed by one cell time by flip-flop 1014 to produce a signal WINNER.P. WINNER.P is also used by the border generator shown in FIG. 12.

There is always a winning window in the preferred embodiment. Host processor 502 defines a default window if a user fails to do so.

Address generator 608, shown in FIG. 11, in each per window circuit uses the "in window" signals from FIG. 9 and the WINNER signal from FIG. 10 to generate bitmap addresses. Present bitmap address is maintained in a register ADDR.CUR 1100. The cell clock signal appearing on lead 1102 loads an address into' register 1100 from one of the sources in the upper part of FIG. 11 at the beginning of each cell time. An output driver 1104 gates the address in register 1100 to the bitmap address leads A19' through A00' at the proper times and thence to the common portion of the window manager. Enable signals appearing on lead 1106 to driver 1104 determine when addresses are gated to these address leads. The upper boolean enabling term (WINNER) (BORDER) (YEF) (YLF), shown on lead 1106 in FIG. 11, activates driver 1104 when this window is determined to be the highest depth and a border is present. Circuitry for generating the BORDER signal is shown in FIG. 12. (YEF) (YLF) insures that the screen area being scanned is inside the border area. The signal WINNER is true only when XF is present. This insures that the horizontal line portion being scanned is also within the window. The bottom enabling term on lead 1106, (WINNER) $\overline{\text{(BORDER)}}$ (YEF + YLF), enables address outputting for the entire window, including the normal border areas, when no border is present.

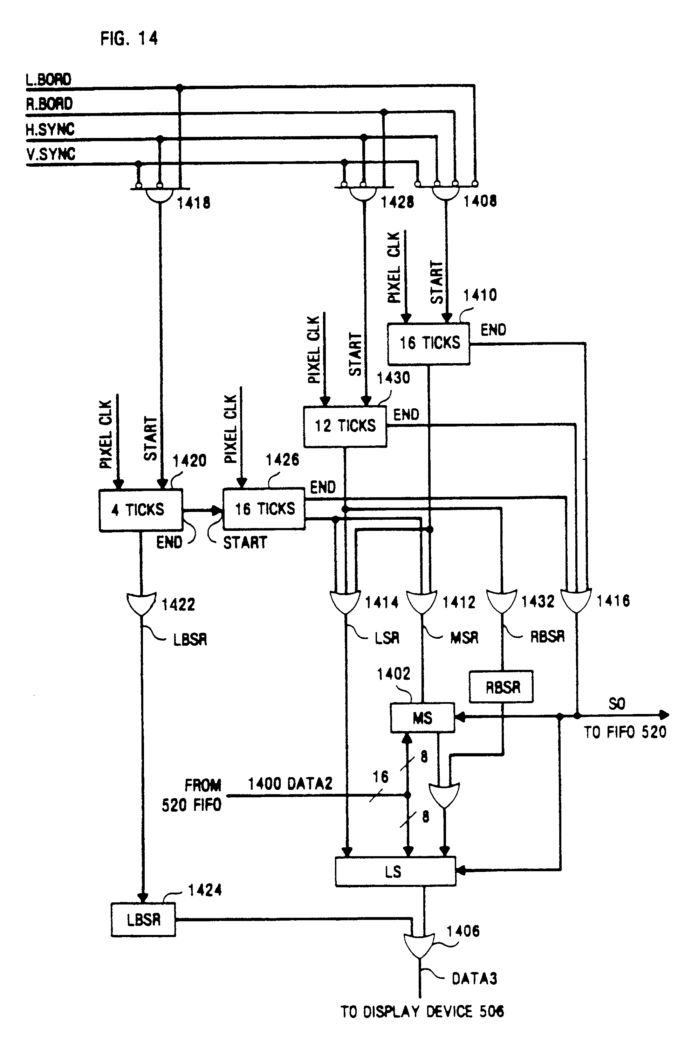

At the beginning of a screen scan, the vertical sync signal V.SYNC enables a driver 1108, which gates the base address of this window into register 1100. This prepares the starting bitmap memory address when the raster first enters the window. In addition to being gated to the address bus at appropriate times, the contents of ADDR.CUR are returned on lead 1110 to one input of a fast adding circuit 1112 at the upper right corner of FIG. 11. A second input of adder 1112 is attached to a positive voltage at 1114. This causes adder 1112 to increment the address from ADDR.CUR by one. This incremented address is returned and loaded into register 1100 at the beginning of each cell time while driver 1116 is enabled. The signals appearing on enabling lead 1118 follow the boolean expression (XF) (YEF) (YLF) + (XF) (YEF + YLF), which is true when the screen raster is inside the border and/or window area. It may be helpful to now refer to FIG. 14 which identifies the various parts of a window with appropriate boolean expressions. This arrangement increments ADDR.CUR 1100 each cell time to move sequentially through the bitmap until the raster leaves the right side edge of the window on the present screen line. When the raster moves out of the window on the right side of the screen, a jump in the bitmap address is made to the proper address associated with the left side of the window in the next screen line. A slow adder is used for this purpose, since time is available for address update until the raster actually arrives at the next window left edge. Slow adder 1120 adds the contents of register ADDR.JMP (see FIGS. 3 and 4) to the current address. At the beginning of the next screen line, assuming that this line is still within the window, driver 1122 is enabled by the signal on lead 1124, (H.SYNC) ((YEF) (YLF) + (YEF + YLF)), and gates the new address into ADDR.CUR.

Similarly, driver 1126 gates the beginning bitmap address into ADDR.CUR when it becomes necessary to loop from the bottom of the bitmap (ADDR.BOTM in FIGS. 3 and 4) to the beginning of the bitmap (ADDR.TOP). To accomplish this, comparator 1128 compares the contents of register ADDR.BOT in the descriptor registers circuit with ADDR.CUR and enables driver 1126 when a match occurs.

FIG. 12 shows the display memory control 616 in the common circuitry and per window circuitry that cooperate to control the generation of window borders. The interface between the bitmap address generator 608 and the common circuitry is also shown. The common and per window sections are shown on the left and right of FIG. 12, respectively. First, the bitmap addressing is described. Assuming that the per window circuit shown on the right of FIG. 12 is that of the winner at any given time, an appropriate address appears on the leads A19' to A00' as before described. Leads A19' through A02' appear at the input of a multiplexing circuit 1200 in display memory control 616. Two other inputs to multiplexer 1200 are the display memory row and column signals on leads RAS and CAS. These signals are generated by an address select circuit 1202. The purpose of multiplexer 1200 and address select 1202 is to partition the address on leads A19' through A02' into two parts and to multiplex the two parts onto a nine lead address bus A.OUT. As shown in FIG. 5, A.OUT extends to the display memory 504. Address select 1202 merely toggles signals on RAS and CAS at proper times based on the word clock to accomplish this purpose.

Border detector 610, shown on the right of FIG. 12, generates signals whenever the raster coincides ·with a border area of a winning window. These signals cause the automatic generation of raster border signals which are modulated into the display signal stream instead of signals from display memory 504. Specifically, gates 1220, 1222 and 1224 are enabled by a signal CNTL.BORD from the descriptor register circuit in FIG. 8 if this particular window circuit has a border defined. Whenever this window circuit is the highest depth priority (WINNER true) and the raster is within the left vertical border area as defined by the boolean equation (LF) (LF.P), gate 1220 activates lead L.BORD'. Similarly, gates 1222 and 1224 activate leads H.BORD' and R.BORD', respectively-,,when horizontal and right vertical border areas are detected for this winning circuit. L.BORD', R.BORD, and H.BORD are combined by an OR gate 1225 to generate the above-mentioned signal BORDER. NAND gate 1227 complements BORDER to form $\overline{BORDER}$. According to the inputs to gates 1224, the R.BORD signal is generated as the window is exited on the right. To now generate the right vertical border on the screen just before the window is exited requires that the actual screen signals be generated after detecting such a window exit. This is accomplished by latch circuits described immediately below.

L.BORD' and H.BORD' are inputted to the first of three cascaded latch stages 1204, 1206 and 1208 in the display memory control. R.BORD', however, is inputted to the second latch stage 1206. Similarly, the least significant address leads A01' and A00' from address generator 608 are inputted to the first latch stage 1204 via a circuit 1210. Circuit 1210 decodes the A00' and A01' signals to generate the address enable signal AEN, which is also inputted to the first delay stage 1204. The corresponding output signals from the third stage 1208, A00, A01, AEN, L.BORD, H.BORD and R.BORD are the signals actually used for controlling the screen image. A given cell clock signal at latch 1204 gates in the states of its inputs. Two cell clock signals later, these states appear at the output of latch 1208. The one cell difference in delay between R.BORD and L.BORD created by latches 1206 and 1204 is used by the output current 522 to create right edge window borders, as will be seen.

An AND gate 1219 in the per window circuitry is enabled when the associated window is the winning window. This causes stipple pattern select signals from the descriptor registers to also be gated to the input of first latch 1204. The corresponding delayed output signals appear at the output STIPPLE of latch 1208 in synchronizing with the above-described signals for controlling the actual display of data.

Horizontal border generation on the screen, as well as background window stipple patterns are generated by the stipple circuit 514. The details of circuit 514 are shown in FIG. 13.

A stipple pattern selected circuit 1300 receives the STIPPLE signals to select the pattern for the associated window. A counter 1302 is used to keep track of the pixel spacing between the stipples (e.g., data). Counter 1302 is reset at the beginning of a screen by V.SYNC which is applied to the counter via OR gate 1304. H.SYNC increments counter 1302. Selector 1300 reads the counter outputs to detect when a stipple should be inserted into the display data stream (or determined by the selected stipple pattern). When this occurs, selector 1300 applies a data signal to lead 1306 and a signal to lead 1308 to reset counter 1302. The signal on lead 1306 is injected into the display data stream on DATA0 by an EXCLUSIVE OR gate 1310. The output of gate 1310 extends to a NAND gate 1310. The output of gate 1310 extends to a NAND gate 1312 which outputs the stream to bus DATA1. Bus DATA1 extends to FIFO 520 where the data signals are temporarily stored. Signals for creating a horizontal border on the display device are injected at gate 1312 whenever a H.BORD signal appears on lead 1314.

The output control 522 in FIG. 14 performs the final operations to generate the vertical window borders. Cell data from FIFO 520 appears on incoming bus 1400 in sixteen bit parallel format. The eight most significant of these bits are inputted to a shift register 1402 and the eight least significant bits are put into another shift register 1404, both under control of a shift out signal SO, described below. When no border considerations are present, signals on leads LSR and MSR cause the data to be shifted out serially from SR 1404 to the display device 506 via OR gate 1406 and simultaneously from SR 1402 to SR 1404.

Signals on leads LSR and MSR are generated as follows. Gate 1408 is activated when neither L.BORD or R.BORD is present. An output signal of gate 1408 activates a tick circuit 1410. Circuit 1410, in turn, then outputs a stream of sixteen pulses to OR gates 1412 and 1414 in synchronism with pixel clock pulses to shift out one cell of data from SRs 1402 and 1404. At the end of the sixteen pulse stream, tick circuit applies a signal to OR gate 1416 to generate the SO signal. This signal is returned to FIFO 520 to gate out another cell of data. Simultaneously, it gates that data into SRs 1402 and 1404. When a left-edge border is detected L.BORD activates gate 1418, which, in turn, activates tick circuit 1420. Four pulses are applied to OR gate 1422 as a result. The resulting four signals on lead LBSR shift out four fixed signals from a SR 1424 to inject a four pixel wide portion of a vertical border. At the end of this interval, tick circuit 1420 activates tick circuit 1426, which pulses gates 1412 and 1414 to shift out another cell of data from SRs 1402 and 1404. When this is accomplished, circuit 1426 pulses OR gate 1416 to generate SO. Gate 1428 is activated when a right-edge border is detected. In response, tick circuit 1430 generates 12 tick pulses. The first eight of these cause eight data bits to be outputted from the least significant SR 1404. Simultaneously, twelve border signals are shifted into SR 1404 by the tick signals applied to OR gate 1432. The first four of these border signals will eventually be outputted from SR 1404 to the data stream. The remaining will be replaced by new cell data from FIFO 520, as described.

## Claims

1. A bitmapped graphics workstation comprising a host processor (502), a visual output display device (506) having a raster-scanned display screen, a display memory (504), means (510, 512, 520, 522) for transmitting retrieved display data to the dis-play device in synchronism with the raster and means (500) for defining a plurality of independent windows (W1, W2) on the screen and for controlling the display of data in each of the windows, a plurality of bitmap storage areas in the display memory (504), each area having contiguous storage words addressable by the host processor (502) for storing display data for a specific window, characterized by :
the means for defining (500) comprises a common circuit (600) connected to a plurality of individual window circuits (602-1, 602-2...) and includes means (618) for storing a depth priority for each window and means (616) for controlling the display memory,
each window circuit being associated with a window and being further characterized by :
means (604-1, 604-2...) for storing data defining the boundaries of its associated window,
first means (606-1, 606-2...) responsive to the window-defining data for identifying when the screen raster is refreshing an area of the screen associated with the defined window,
second means (612-1, 612-2...) for identifying when the defined window is the winning window with the highest depth priority, and
means (608-1, 608-2...) responsive to the first and second identifying means for generating addresses in the bitmap storage area associated with the winning window.

2. The invention of claim 1 further comprising first access means (P.ADDR, P.DATA) for allowing the host processor (502) to write display data into the bitmap storage areas.

3. The invention of claim 1 further comprising second access means (614) for allowing the host processor (502) to write window defining data into the window boundary storing means (604-1, 604-2...).

4. The invention of claim 1 further comprising means (514) for modulating into the display data sent to the display device (506) signals for creating a background stipple pattern for the windows.

5. The invention of claim 4 further comprising means (1300, 1302) for specifying individual stipple patterns for each window.

6. The invention of claim 5 wherein the stipple specifying means (514, 1300, 1302) further comprises means (520) for storing individual stipple pattern indications for each window.

7. The invention of claim 6 further comprising third access means (1310, 1312) for allowing the host processor (502) to write data into the stipple pattern storing means (520).

8. The invention of claim 1 wherein the first identifying means (606-1, 606-2...) further comprises
means for storing data representing screen coordinate positions which define the boundaries of the associated window on the screen,
means (906 to 912) for comparing the window coordinate data with the contents of first counter means (in 614) for identifying the horizontal position of the raster on the screen and second counter means (in 614) for identifying the vertical position of the raster on the screen, and
means (910, 920, 914) responsive to the comparing means for generating signals indicating that the raster is within the window.

9. The invention of claim 8 wherein a bitmap address identifies a word of display data of a prescribed width and wherein the first counter means (in 614) identifies a horizontal position on a scan line of the display device (506) that is an integer subdivision of the prescribed width of the word.

10. The invention of claim 1 wherein the bitmap address generating means (608-1, 608-2...) further comprises
first means (814) for storing an address of a bitmap word associated with the beginning of the associated window on the screen when scanned from top-to-bottom and left-to-right,

8

second means (816) for storing a bitmap address offset value representing the bitmap address distance between the right vertical edge of the associated window in one scan line on the screen and the beginning of the left vertical edge of the window in the next consecutive scan line of the screen,

third means (812) for storing a bitmap address corresponding to the last word in the bitmap containing data associated with the window,

fourth means (810) for storing a bitmap address identifying the first word in the bitmap associated with the window,

fifth means (1100) for storing a present bitmap address, means (1102) for incrementing the contents of the last mentioned storing means in synchronism with movement of the raster,

means (1108) for gating the contents of the first storing means into the fifth storing means when the window is initially entered on each screen refresh,

means (1120) for adding the contents of the second storing means to the contents of the fifth storing means when the window is exited at the right vertical edge, and

means (1126, 1128) for gating the contents of the fourth storing means into the fifth storing means when the present bitmap address equals the contents of the third storing means.

11. The invention according to one or more of the preceding claims, characterized in that the means and circuits interfacing with the host processor (502) and the visual output display circuit (506) are implemented on one or more semiconductor circuit chips.

**Ansprüche**

1. Bitorganisierte Grafik-Arbeitsstation mit einem Host-Prozessor (502), einem optischen Ausgabe-Anzeigegerät (506) mit einem Raster-abgetasteten Bildschirm, einem Bildschirmspeicher (504), einer Einrichtung (510, 512, 520, 522) zur Übertragung wiedergewonnener Anzeigedaten an das Bildschirmgerät in Synchronismus mit dem Raster, einer Einrichtung (500) zur Definition einer Vielzahl von unabhängigen Fenstern (W1, W2) auf dem Schirm und zur Steuerung der Darstellung von Daten in jedem Fenster und einer Vielzahl von Bitmap-Speicherbereichen im Bildschirmspeicher (504), wobei jeder Speicherbereich beieinanderliegende, durch den Host-Prozessor (502) adressierbare Speicherwörter zur Aufnahme von Wiedergabedaten für ein besonderes Fenster besitzt, **dadurch gekennzeichnet, daß die Einrichtung (500) zur Fensterdefinition eine gemeinsame Schaltung (600) aufweist, die mit einer Vielzahl von individuellen Fensterschaltrngen (602-1, 602-2...) verbunden ist, und eine Einrichtung (618) zur Speicherung einer Tiefenpriorität für jedes Fenster sowie eine Einrichtung (616) zur Steuerung des Bildschirmspeichers, und daß jede Fensterschaltung einem Fenster zugeordnet ist und ferner gekennzeichnet ist durch :

eine Einrichtung (604-1, 604-2...) zur Speicherung von Daten, die die Grenzen ihres zugeordneten Fensters definieren,

eine erste Einrichtung (606-1, 606-2...) die auf die Fensterdefinierenden Daten angibt, wenn das Bildschirmraster einen Bereich des Schirms auffrischt, der dem definierten Fenster zugeordnet ist,

eine zweite Einrichtung (612-1, 612-2...), die angibt, wenn das definierte Fenster das gewinnende Fenster mit der höchsten Tiefenpriorität ist, und

eine Einrichtung (608-1, 608-2...), die auf die erste und zweite Einrichtung anspricht und Adressen in dem dem gewinnenden Fenster zugeordneten Bitmap-Speicherbereich erzeugt.

2. Arbeitsstation nach Anspruch 1 mit ferner einer ersten Zugriffseinrichtung (P.ADDR, P.DATA), die dem Host-Prozessor (502) gestattet, Wiedergabedaten in die Bitmap-Speicherbereiche zu schreiben.

3. Arbeitsstation nach Anspruch 1 mit ferner einer zweiten Zugriffseinrichtung (614), die dem Host-Prozessor (502) gestattet, Fenster-definierende Daten in die Fenstergrenzen-Speichereinrichtung (604-1, 604-2...) zu schreiben.

4. Arbeitsstation nach Anspruch 1 mit ferner einer Einrichtung (514), die in die zum Bildschirmgerät (506) übertragenen Wiedergabedaten Signale zur Erzeugung eines Hintergrund-Punktmusters für die Fenster einmoduliert.

5. Arbeitsstation nach Anspruch 4 mit ferner einer Einrichtung (1300, 1302), die individuelle Punktmuster für jedes Fenster angibt.

6. Arbeitsstation nach Anspruch 5, bei der die Einrichtung (514, 1300, 1302) zur Angabe von Punktmustern eine Einrichtung (520) zur Speicherung individueller Punktmusterangaben für jedes Fenster aufweist.

7. Arbeitsstation nach Anspruch 6 mit ferner einer dritten Zugriffseinrichtung (1310, 1312), die dem Host-Prozessor (502) gestattet, Daten in die Punktmuster-Speichereinrichtung (520) zu schreiben.

8. Arbeitsstation nach Anspruch 1, bei der die erste Angabeeinrichtung (606-1, 606-2...) ferner aufweist :

eine Einrichtung zur Speicherung von Daten, die Bildschirm-Koordinatenpositionen darstellen, welche die Grenzen des zugeordneten Fensters auf dem Bildschirm definieren,

eine Einrichtung (906 bis 912) zum Vergleichen der Fensterkoordinatendaten mit dem Inhalt einer ersten Zählereinrichtung (in 614) zur Identifizierung der horizontalen Position des Rasters auf dem Schirm und einer zweiten Zählereinrichtung (in 614) zur Identifizierung der vertikalen Position des Rasters auf dem Schirm, und

eine Einrichtung (910, 920, 914) die unter Ansprechen auf die Vergleichseinrichtung Signale erzeugt, die angeben, daß das Raster sich innerhalb des Fensters befindet.

9. Arbeitsstation nach Anspruch 8, bei der eine Bitmap-Adresse ein Displaydatenwort einer vorbestimmten Breite identifiziert und die erste Zählereinrichtung (in 614) eine Horizontalposition auf einer Abtastzeile des Bildschirmgerätes (506) angibt, die ein ganzzahliger Teiler der vorgeschriebenen Wortbreite ist.

10. Arbeitsstation nach Anspruch 1, bei der die Einrichtung (608-1, 608-2...) zur Bitmap-Adressenerzeugung ferner aufweist :

eine erste Einrichtung (814) zur Speicherung einer Adresse eines Bitmap-Wortes, das dem Anfang des zugeordneten Fensters auf dem Bildschirm zugeordnet ist, wenn dieser von oben nach unten und von links nach rechts abgetastet · wird,

eine zweite Einrichtung (816) zur Speicherung eines Bitmap-Adressenabstandswertes, der den Bitmap-Adressenabstand zwischen der rechten vertikalen Kante des zugeordneten Fensters auf einer Abtastzeile des Schirms und dem Anfang der linken vertikalen Kante des Fensters auf der nächstfolgenden Abtastzeile des Schirms darstellt,

eine dritte Einrichtung (812) zur Speicherung einer Bitmap-Adresse, die dem letzten Wort in dem Bitmap-Bereich entspricht, das dem Fenster zugeordnete Daten enthält,

eine vierte Einrichtung (810) zur Speicherung einer Bitmap-Adresse, die das erste Wort in dem Bitmap-Bereich identifiziert, der dem Fenster zugeordnet ist,

eine fünfte Einrichtung (1100) zur Speicherung einer augenblicklichen Bitmap-Adresse, einer Einrichtung (1102) zur Erhöhung des Inhalts der letztgenannten Speichereinrichtung in Synchronismus mit der Bewegung des Rasters,

eine Einrichtung (1108) zur Weiterleitung des Inhalts der ersten Speichereinrichtung in die fünfte Speichereinrichtung, wenn bei jedem Bildschirmauffrischen zu Anfang in das Fenster eingetreten wird,

eine Einrichtung (1120) zum Addieren des Inhalts der zweiten Speichereinrichtung zum Inhalt der fünften Speichereinrichtung, wenn das Fenster an der rechten Vertikalkante verlassen wird, und eine Einrichtung (1126, 1128) zur Weiterleitung des Inhalts der vierten Speichereinrichtung in die fünfte Speichereinrichtung, wenn die augenblickliche Bitmap-Adresse dem Inhalt der dritten Speichereinrichtung entspricht.

11. Arbeitsstation nach einem oder mehreren der vorhergehenden Ansprüche, dadurch gekennzeichnet, daß die mit dem Host-Prozessor (502) und dem optischen Ausgabe-Anzeigegerät (506) in Verbindung tretenden Einrichtungen und Schaltungen auf einem oder mehreren Halbleiterschaltungsplättchen verwirklicht sind.

## Revendications

1. Une station de travail graphique fonctionnant en mode point, comprenant un processeur hôte (502), un dispositif de visualisation (506) pour la sortie visuelle, ayant un écran de visualisation à balayage par trame, une mémoire de visualisation (504), des moyens (510, 512, 520, 522) pour transmettre vers le dispositif de visualisation des données de visualisation lues, en synchronisme avec la trame, et des moyens (500) pour définir un ensemble de fenêtres indépendantes (W1, W2) sur l'écran, et pour commander la visualisation de données dans chacune des fenêtres, un ensemble de zones d'enregistrement de table de bits dans la mémoire de visualisation (504), chaque zone contenant des mots de mémoire contigus, adressables par le processeur hôte (502), pour l'enregistrement de données de visualisation pour une fenêtre spécifique, caractérisée en ce que :

les moyens de définition (500) comprennent un circuit commun (600) qui est connecté à un ensemble de circuits individuels de fenêtres (602-1, 602-2,...) et ils comprennent des moyens (618) pour enregistrer une priorité de profondeur pour chaque fenêtre, et des moyens (616) pour commander la mémoire de visualisation,

chaque circuit de fenêtre étant associé à une fenêtre et étant en outre caractérisé par :

des moyens (604-1, 604-2,...) pour enregistrer des données définissant les limites de la fenêtre associée,

des premiers moyens (606-1, 606-2,...) qui réagissent aux données de définition de fenêtre en identifiant le moment auquel la trame de l'écran est en train de régénérer une zone de l'écran qui est associée à la fenêtre définie,

des seconds moyens (612-1, 612-2,...) pour identifier le moment auquel la fenêtre définie est la fenêtre vainqueur, ayant la priorité de profondeur la plus élevée, et

des moyens (608-1, 608-2,...) qui fonctionnent sous la dépendance des premiers et seconds moyens d'identification de façon à générer des adresses dans la zone d'enregistrement de table de bits qui est associée à la fenêtre vainqueur.

2. L'invention de la revendication 1, comprenant en outre des premiers moyens d'accès (P.ADDR, P-.DATA) pour permettre au processeur hôte (502) d'écrire des données de visualisation dans les zones d'enregistrement de table de bits.

3. L'invention de la revendication 1, comprenant en outre des seconds moyens d'accès (614) pour permettre au processeur hôte (502) d'écrire des données de définition de fenêtre dans les moyens d'enregistrement de limite de fenêtres (604-1, 604-2,...).

4. L'invention de la revendication 1, comprenant en outre des moyens (514) pour moduler dans les données de visualisation qui sont émises vers le dispositif de visualisation (506), des signaux destinés à créer un motif de pointillé de fond pour les fenêtres.

5. L'invention de la revendication 4, comprenant en outre des moyens (1300, 1302) pour spécifier des motifs de pointillés individuels pour chaque fenêtre.

6. L'invention de la revendication 5, dans lequel les moyens de spécification de pointillés (514, 1300, 1302) comprennent en outre des moyens (520) qui sont destinés à enregistrer des indications de motifs de pointillés individuelles pour chaque fenêtre.

7. L'invention de la revendication 6, comprenant en outre des troisièmes moyens d'accès (1310, 1312) pour permettre au processeur hôte (502) d'écrire des données dans les moyens d'enregistrement de motifs de pointillés (520).

8. L'invention de la revendication 1, dans lequel les premiers moyens d'identification (606-1, 606-2,...) comprennent en outre :

des moyens pour enregistrer des données représentant des positions de coordonnées sur l'écran qui définissent les limites de la fenêtre associée sur l'écran ;

des moyens (906 à 912) pour comparer les donnée : de coordonnées de fenêtre avec le contenu de premiers moyens de comptage (dans 614), pour identifier la position horizontale de la trame sur l'écran, et de seconds moyens de comptage (dans 614) pour identifier la position verticale de la trame sur l'écran, et

des moyens (910, 920, 914) qui fonctionnent sous la dépendance des moyens de comparaison pour générer des signaux indiquant que la trame se trouve à l'intérieur de la fenêtre.

9. L'invention de la revendication 8, dans laquelle une adresse de table de bits identifie un mot de données de visualisation d'une largeur déterminée, et dans laquelle les premiers moyens de comptage (dans 614) identifient une position horizontale sur une ligne de balayage du dispositif de visualisation (506) qui est une subdivision entière de la largeur déterminée du mot.

10. L'invention de la revendication 1, dans laquelle les moyens de génération d'adresse de table de bits (608-1, 608-2,...) comprennent en outre :

des premiers moyens (814) pour enregistrer une adresse d'un mot de table de bits qui est associé au début de la fenêtre associée sur l'écran, lorsque ce dernier est balayé du haut vers le bas et que ce dernier est balayé du haut vers le bas et de la gauche vers la droite,

des seconds moyens (816) pour enregistrer une valeur de décalage d'adresse de table de bits représentant la distance d'adresse de table de bits entre le bord vertical droit de la fenêtre associée dans une ligne de balayage sur l'écran, et le début du bord vertical gauche de la fenêtre dans la ligne de balayage consécutive suivante sur l'écran,

des troisièmes moyens (812) pour enregistrer une adresse de table de bits correspondant au dernier mot dans la table de bits contenant des données associées à la fenêtre,

des quatrièmes moyens (810) pour enregistrer une adresse de table de bits identifiant le premier mot dans la table de bits associée à la fenêtre,

des cinquièmes moyens (1100) pour enregistrer une adresse de table de bits présente, et des moyens (1102) pour incrémenter le contenu des moyens d'enregistrement mentionnés en dernier, en synchronisme avec le mouvement de la trame,

des moyens (1108) pour charger le contenu des premiers moyens d'enregistrement dans les cinquièmes moyens d'enregistrement au moment de l'entrée initiale dans la fenêtre à chaque régénération de l'écran,

des moyens (1120) pour additionner le contenu des seconds moyens d'enregistrement au contenu des cinquièmes moyens d'enregistrement au moment de la sortie de la fenêtre sur le bord vertical droit, et

des moyens (1126, 1128) pour charger le contenu des quatrièmes moyens d'enregistrement dans les cinquièmes moyens d'enregistrement, lorsque l'adresse de table de bits présente est égale au contenu des troisièmes moyens d'enregistrement.

11. L'invention selon l'une ou plusieurs des revendications précédentes,

caractérisée en ce que les moyens et les circuits qui remplissent la fonction d'interface avec le processeur hôte (502) et le circuit de visualisation (506) pour la sortie visuelle, sont réalisés sur une ou plusieurs puces de circuits à semiconducteurs.

FIG. 1

FIG. 2
(PRIOR ART)

FIG.3

DISPLAY MEMORY

ADDR.BTM

ADDR.JMP

ADDR.BASE

ADDR.TOP

W1

W2

LINE X

LINE X+1

W.WIDTH

B.WIDTH

WINDOW BIT MAP

FIG. 7

A B C D
E F G H
I J K L
M N O P

FIG. 4

ADDR.TOP

ADDR.BASE

ADDR.BTM

W1

W.WIDTH

B.WIDTH

W1 BIT MAP

LINE 0
LINE 1

# FIG. 5

EP 0 229 164 B1

# FIG. 6

COMMON CIRCUITS ⌐600

PER-WINDOW CIRCUITS ⌐602-1
⌐602-2
⌐602-n

⌐618
DEPTH PRIORITY ENCODER

32

5

⌐612-1
WINDOW WINNER

⌐610-1
BORDER DETECTOR

⌐616
DISPLAY MEMORY CONTROL

⌐608-1
ADDRESS GENERATOR

⌐606-1
IN WINDOW DETECTOR

TO HOST PROC

P.ADDR

P.DATA

⌐614
HOST INTERFACE

⌐604-1
DESCRIPTOR REGISTERS

EP 0 229 164 B1

FIG. 8

EP 0 229 164 B1

16

# FIG. 9

'IN WINDOW' DETECTOR

HOST INTERFACE

# FIG. 10

COMMON ← — — → PER WINDOW →

FIG 8

TO FIGS 11,12

CNTL.DEPTH

WINNER

H.SYNC

1014

618

DEPTH PRIORITY ENCODER

5

COMP — 1004

D F/F

WINNER.P — TO FIG.12

CELL CLOCK

1008

1/32 TRANSLATOR

1016

(XF)(YEF+YLF)

1010

32

## FIG. 11

ADDRESS GENERATOR

FIG. 12

## FIG. 13

STIPPLE CIRCUIT

H.SYNC

V.SYNC

COUNTER — 1302

1304

1300

FROM FIG. 12 — STIPPLE 3

PIXEL CLOCK

STIPPLE PATTERN SELECTOR

1306

FROM FIG. 5 — DATA0 16

FROM FIG. 12 — H.BORD

1310

1314

16

1312

16

DATA1 → TO FIFO 520

## FIG. 15

COORD.L   COORD.R

LINE.T

LINE.B

$(XF)(YEF)(\overline{YLF})$

$(XF)(YEF)(YLF)$

$(XF)(\overline{YEF})(YLF)$

YLF   YEF

$\overline{XF}$   XF   $\overline{XF}$

FIG. 14

EP 0 229 164 B1

22